# EUROPÄISCHE PATENTANMELDUNG

(11) **EP 0 969 677 A2**
(43) Veröffentlichungstag der Anmeldung: **05.01.2000**
(21) Anmeldenummer: 99440153.7
(22) Anmeldetag: 18.06.1999
(51) Int. Cl.: H04Q 3/00

(54) **Verfahren zur Bereitstellung von Telekommunikationsdiensten sowie Vermittlungsknoten, Dienststeuerknoten und Vermittlungssystem**

(30) Priorität: 30.06.1998 DE 19829024
(71) Anmelder: ALCATEL, 75008 Paris (FR)
(72) Erfinder: Kaiser, Bernhard, 71665 Vaihingen/Enz (DE)
(74) Vertreter: Zinsinger, Norbert

(57) **Zusammenfassung**

Die Erfindung betrifft einVerfahren zur Bereitstellung von Telekommunikationsdiensten sowie einen Vermittlungsknoten, einen Dienststeuerknoten und ein Vermittlungssystem zur Durchführung des Verfahrens. Durch eine Verbindungsanforderung eines Teilnehmers (A) eine Telekommunikationsnetzes (T_NET) wird eine von der Steuerung (CONTR) des Vermittlungsknotens (SSP) ausgeführte Dienstvermittlungsfunktion (SSF) veranlaßt, eine Dienstanforderungsnachricht an eine Dienststeuerfunktion (LSCF1) zu senden, worauf die Dienststeuerfunktion (LSCF1) die Erbringung des Telekommunikationsdienstes steuert. Die Anforderungsnachricht wird von der Steuerung (CONTR) des Vermittlungsknotens (SSP) auf ein LAN umgeleitete, das die Systemplattform (SPL1) der Steuerung (CONTR) des Vermittlungsknotens (SSP) mit der System plattform des Dienststeuerknoten (LSCP1, LSCP2) verbindet. Die Dienststeuerfunktion (SCF1) wird nun von dem derart über das LAN verbundenen Dienststeuerknoten (LSCP1, LSCP2) ausgeführt. Eie Dienstvermittlungsfunktion (SSF) tauscht mit der Dienststeuerfunktion (SCF1) zur Diensterbringung INAP Nachrichten (INAPM) aus, die mittels eines LAN Protokolls zwischen dem Vermittlungsknoten (SSP) und dem Dienststeuerknoten (LSCP1) transportiert werden.

## Beschreibung

Die Erfindung betrifft ein Verfahren zur Bereitstellung von Telekommunikationsdiensten nach dem Oberbegriff von Anspruch 1, einen Vermittlungsknoten für ein Telekommunikationsnetz nach dem Oberbegriff von Anspruch 9, einen Dienststeuerknoten zur Unterstützung der Erbringung von Telekommunikationsdiensten nach dem Oberbegriff von Anspruch 10 und ein Vermittlungssystem für ein Telekommunikationsnetz nach dem Oberbegriff von Anspruch 11.

Die Erfindung geht von der Erbringung von Telekommunikationsdiensten gemäß der IN Architektur (IN= Intelligent Network) aus, wie sie beispielsweise in dem Artikel "Intelligent Networks", Nachrichtentechnik, Elektronik, Berlin 40, 1990, Seiten 162 bis 164 beschrieben ist.

Ein zentraler Dienststeuerpunkt ist über das Nr. 7 Zeichengabenetz mit mehreren Dienstvermittlungspunkten verbunden. Der Dienststeurpunkt steuert für die mit ihm verbundenen Dienstvermittlungspunkte zentral die Erbringung von einem oder von mehreren Telekommunikationsdiensten. Bei den Dienstvermittlungspunkten handelt es sich um speziell ausgestattete Vermittlungsstellen eines Telekommunikationsnetzes. Empfängt eine dieser Vermittlungsstellen von einem Teilnehmer des Telekommunikationsnetzes eine spezieller Verbindungsanforderungen, so wird eine in der Vermittlungsstelle integrierte Dienstvermittlungsfunktion getriggert, die sodann eine Dienstanforderungsnachricht an den Dienststeuerpunkt sendet. Diese Dienstanforderungsnachricht triggert im Dienststeuerpunkt die zugeordnete Dienstelogik, die dann die Erbringung des Telekommunikationsdienstes steuert, in dem sie beispielsweise den Dienstvermittlungspunkt anweist, die Verbindungsanforderung mit einer anderen Zielrufnummer weiterzuvermitteln oder ein Dienstunterstützungssystem ansteuert, das Sprachansagen anlegt. Die Kommunikation zwischen dem zentralen Dienststeuerpunkt und den Dienstvermittlungspunkten wird hierbei über das Nr. 7 Signalisierungsnetz geführt.

Der Erfindung liegt nun die Aufgabe zugrunde, die Anzahl der Telekommunkationsdienste, die in einem Telekommunikationsnetz parallel erbracht werden können, zu erhöhen.

Diese Aufgabe wird gelöst durch ein Verfahren zur Bereitstellung von Telekommunikationsdiensten nach der Lehre von Anspruch 1, einen Vermittlungsknoten für ein Telekommunikationsnetz nach der Lehre von Anspruch 9, einen Dienststeuerknoten zur Unterstützung der Erbringung von Telekommunikationsdiensten nach der Lehre von Anspruch 10 und ein Vermittlungssystem für ein Telekommunikationsnetz nach der Lehre von Anspruch 11.

Der Erfindung liegt hierbei der Gedanke zugrunde, einen Vermittlungsknoten zusätzlich mit einem oder mit mehreren Server-Rechnern auszustatten, die mit dem Rechnersystem des Vermittlungsknotens über ein LAN verbunden sind und die lokal Dienststeuerfunktionen für die Dienstvermittlungsfunktionen des Vermittlungsknotens bearbeiten, wobei diese lokalen Dienststeuerfunktionen mit den lokalen Dienstvermittungsfunktionen mittels INAP Nachrichten kommunizieren, die mittels eines LAN Protokolls transportiert werden.

Der Vorteil der Erfindung besteht zum einen darin, daß die von einem Vermittlungsknoten geforderten Telekommunikationsdienste sehr schnell erbracht werden können: Zwischen Dienststeuer- und Dienstvermittlungsfunktionen besteht eine sehr schnelle Kommunikationsverbindung (LAN) und die Dienststeuerfunktionen für von dem Vermittlungsknoten geforderten Telekommunikationsdienste werden in unmittelbarer Nähe zum Vermittlungsknoten erbracht. Aufgrund der sehr schnellen Kommunikationsverbindung zwischen Dienststeuer und Dienstvermittlungsfunktionen können eine Vielzahl von Telekommunikationsdiensten parallel erbracht werden, ohne daß Kollisionen zu erwarten sind.

Da es sich bei den Server-Rechner, die die Dienststeuerfunktionen ausführen, und der Rechnerplattform des Vermittlungsknotens trotz der räumlichen Nähe und der LAN Kopplung um vollständig getrennte Systeme (z.B. basierend auf unterschiedlichem Betriebssystemen) handeln kann, die lediglich über das INAP Protokoll gekoppelt sind, ist eine weitgehende Entkopplung der Dienststeuer- und der Dienstvermittlungsfunktionen möglich, die Komplexität der Software wird verringert und an die spezielle Funktion angepaßte Komponenten können verwendet werden.

Die für die Bearbeitung von Telekommunikationsdiensten zur Verfügung stehende Datenverarbeitungskapazität kann in einfacher Weise durch das Hinzufügen weiterer Server-Rechner an den Bedarf angepaßt werden. Dies ist auch in Bezug auf die Kommunikationsverbindung Dienstvermittlungsfunktionen -Dienststeuerfunktionen durch die Hinzufügung weiterer LAN Verbindungen möglich.

Weiter wird durch die Erfindung die Belastung des Signalisierungsnetzes verringert und den übrigen Dienstvermittlungspunkten steht eine größere Datenbearbeitungskapazität beim Zugriff auf einen zentralen Dienststeuerpunkt zur Verfügung.

Ein weiterer, wesentlicher Vorteil der Erfindung besteht darin, daß bereits bestehende Baugruppen durch die Verwendung des INAP Protokolls wiederverwendet werden können und somit die Erfindung kostengünstig realisiert werden kann.

Die Server-Rechner, die die Dienststeuerfunktionen ausführen, können besonders einfach aufgebaut werden, wenn sie lediglich Dienste für Dienstvermittlungsfunktionen erbringen, die von dem mit ihnen über das LAN verbundenen Vermittlungsknoten ausgeführt werden. Weiter ist ein enge räumliche Anordnung von Server-Rechnern und Vermittlungsknoten vorteilhaft, beispielsweise eine Anordnung innerhalb einer Vermittlungsstelle.

Weitere vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines erfindungsgemäßen Vermittlungssystems mit einem erfindungsgemäßen Vermittlungsknoten und mehreren erfindungsgemäßen Dienststeuerknoten
- Fig. 2a: zeigt eine funktionelle Darstellung der Kommunikation zwischen dem Vermittlungsknoten und den Dienststeuerknoten nach Fig. 1 gemäß eines ersten Ausführungsbeispiels.

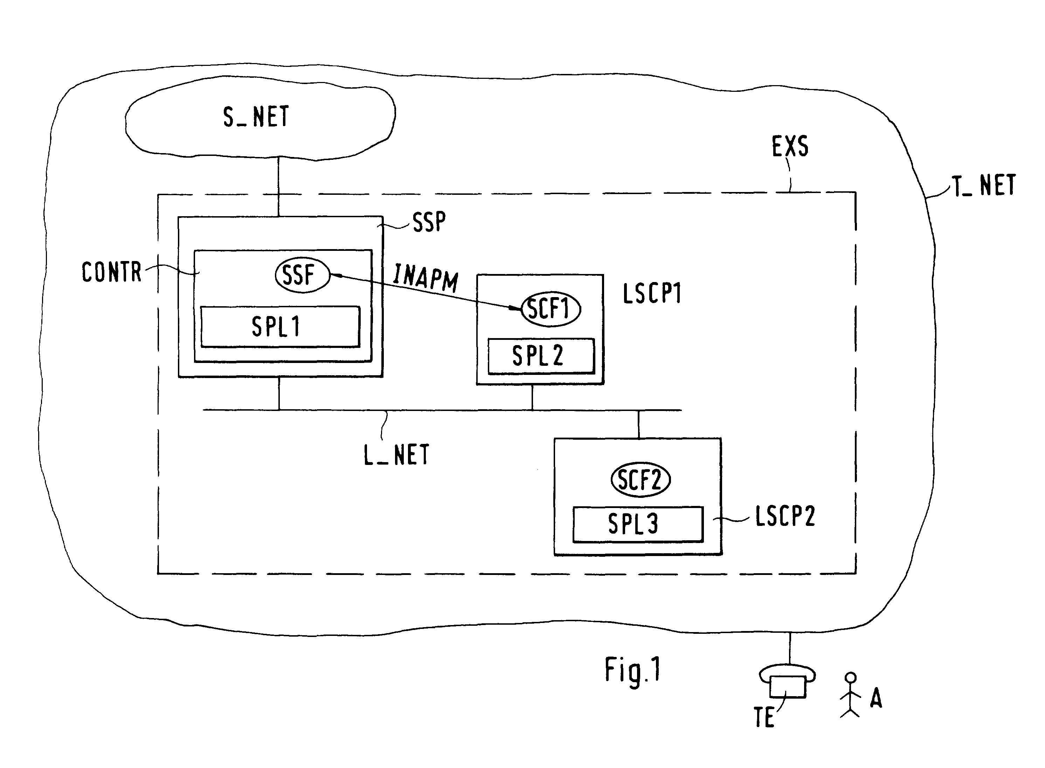

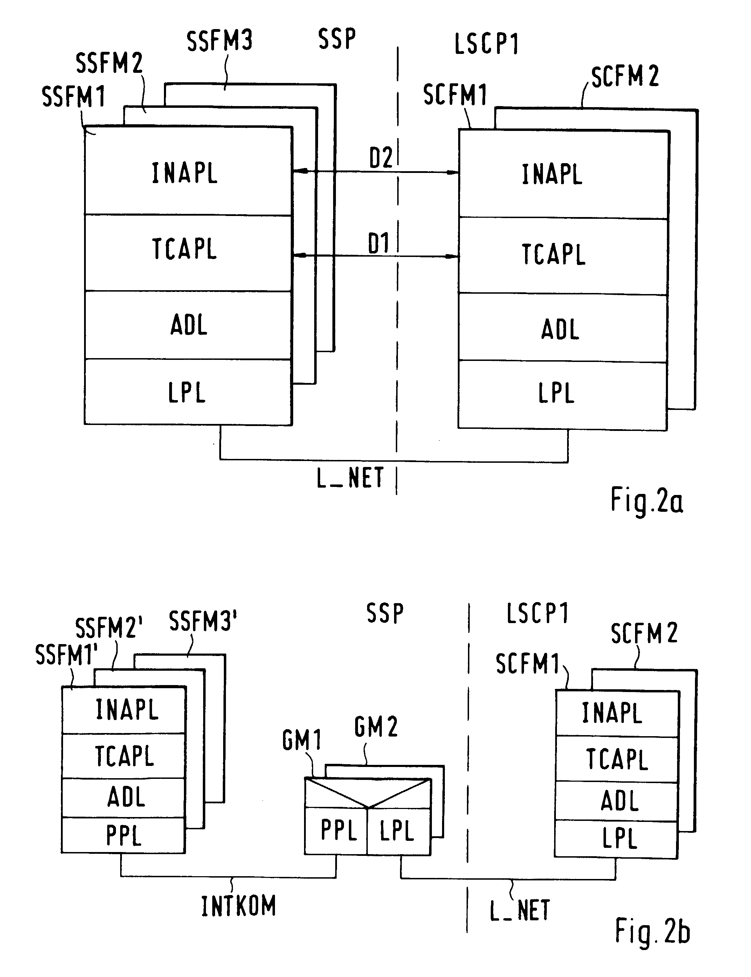

- Fig. 2a: zeigt eine funktionelle Darstellung der Kommunikation zwischen dem Vermittlungsknoten und den Dienststeuerknoten nach Fig. 1 gemäß eines zweiten Ausführungsbeispiels.

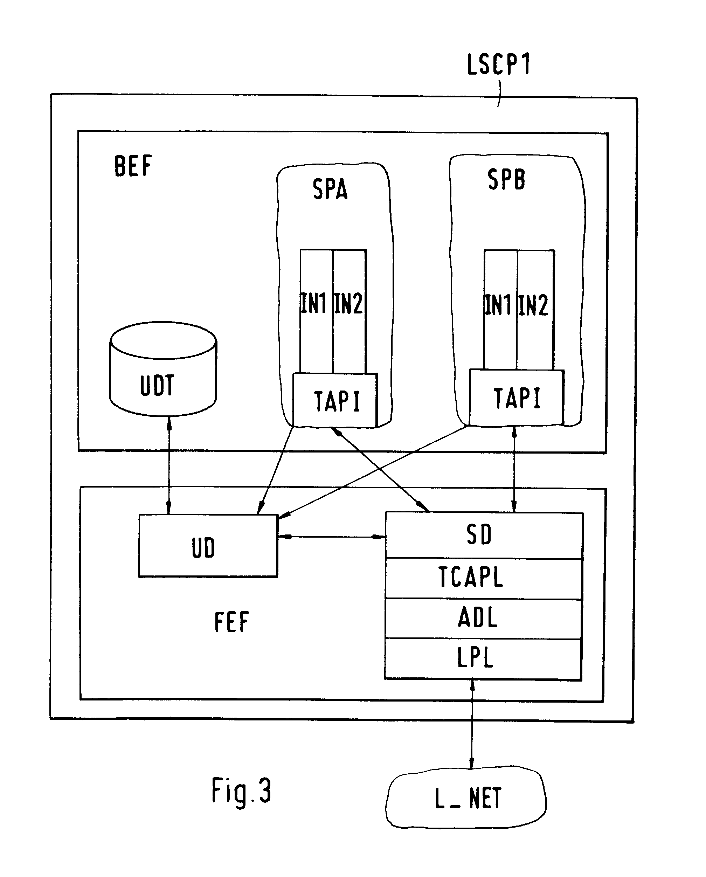

- Fig. 3: zeigt eine funktionelle Darstellung eines Dienststeuerknotens nach Fig. 1.

Fig. 1 zeigt eine Telekommunikationsnetz T_NET, mit dem ein Endgerät TE eines Teilnehmers A verbunden ist. Das Telekommunikationsnetz T_NET weist ein Signalisierungsnetz S_NET und ein Vermittlungssystem EXS auf, das seinerseits einen Vermittlungsknoten SSP, zwei Dienststeuerknoten LSCP1 und LSCP2 und ein lokales Kommunikationsnetz L_NET aufweist.

Das Telekommunikationsnetz T_NET weist neben dem Vermittlungsknoten SSP noch eine Vielzahl weiterer Vermittlungsknoten auf. Es ist hierbei natürlich auch möglich, daß diese Vermittlungsknoten unterschiedlichen Netzbetreibern zugeordnet sind.

Der Vermittlungsknoten SSP ist mit dem Signalisierungsnetz S_NET und mit dem lokalen Kommunikationsnetz L_NET verbunden, mit dem auch die Dienststeuerknoten LSCP1 und LSCP2 verbunden sind. Die Zahl der Dienststeuerknoten LSCP1 und LSCP2 ist beispielhaft gewählt, es ist jedoch zumindest ein solcher Dienststeuerknoten mit dem Kommunikationsnetz L_NET verbunden. Die Dienststeurknoten LSCP1 und LSCP2 sind vorteilhafterweise räumlich sehr nah beim Vermittlungsknoten SSP angeordnet, sie bilden beispielsweise verschiedene Komponenten ein und derselben Vermittlungsstelle (Vermittlungsstelle im räumlichen Sinn).

Bei dem Vermittlungsknoten SSP handelt es sich um einen Fernsprechvermittlungsknoten, beispielsweise dem Vermittlungsknoten Alcatel1000S12. Es ist natürlich auch möglich, daß es sich bei dem Vermittlungsknoten SSP um einen Vermittlungsknoten handelt, der neben Fernsprechverbindungen auch Bildfernsprech- und/ oder Datenverbindungen vermittelt.

Der Vermittlungsknoten SSP verfügt über Anschlußbaugruppen zum Anschluß von Teilnehmeranschlußleitungen und/oder Anschlußleitungen zu anderen Vermittlungsknoten des Telekommunikationsnetzes T_NET, über ein Koppelnetz zum Schalten von Verbindungen zwischen den Anschlußbaugruppen und über eine Steuerung CONTR, die u. a. den Aufbau von Verbindungen und die Signalisierung mit Teilnehmern und anderen Vermittlungsknoten steuert. Es ist auch möglich, daß die Anschlußbaugruppen dem Anschluß mobiler Teilnehmer dienen. Von den Komponenten des Vermittlungsknotens unterscheidet sich in diesem Ausführungsbeispiel lediglich die Steuerung CONTR von den entsprechenden Komponenten eines üblichen Vermittlungsknotens. Die Steuerung CONTR basiert auf einem Rechnersystem, das aus einem leistungsstarken Zentralrechner oder auch aus mehreren über ein internes Kommunikationsnetz verbundenen Einzelrechnern aufgebaut ist. Auf dieses Rechnersystem setzt sodann eine Betriebssystemplattform auf, auf der Steuerprogramme aufsetzen, die die Funktionen des Vermittlungsknotens SSP steuern. Die Betriebssystemplattform basiert hierbei vorteilhafterweise auf einem speziell für die Anforderungen eines Vermittlungsknotens zugeschnittenes Echtzeitbetriebssystem. Das Rechnersystem und die Betriebssystemplattform bilden zusammen für die auf ihnen aufsetzenden Steuerprogramme eine System plattform SPL1. Von den von diesen Steuerprogrammen erbrachten Funktionen ist in Fig. 1 lediglich eine Funktion SSF gezeigt.

Die Funktion SSF stellt eine Dienstvermittlungsfunktion dar. Sie überwacht Verbindungsanforderung von Teilnehmern des Telekommunikationsnetzes T_NET, die über den Vermittlungsknoten SSP geleitet werden. Wenn sie eine spezielle Verbindungsanforderung erkennt, die die Ausführung eines Telekommunikationsdienstes bedingt, so kommuniziert sie mit der diesem Telekommunikationsdienst zugeordneten Dienststeuerfunktion. Kriterium für eine spezielle Verbindungsanforderung kann beispielsweise die in die Verbindungsanforderung eingetragene Rufnummer des gerufenen Teilnehmers oder auch der rufende Teilnehmer sein, der sie gesendet hat. Weiter führt sie die Instruktion der Dienststeuerfunktion durch, leitet beispielsweise die Verbindungsanforderung an einen anderen Zielteilnehmer weiter oder baut einen Nutzkanal zu dem rufenden Teilnehmer auf.

Die Dienststeuerknoten LSCP1 und LSCP2 weisen jeweils eine Systemplattform SPL2 bzw. SPL3, die jeweils von einem oder mehreren miteinander verbundenen Rechnern und von einer oder mehreren auf diesen aufsetzenden Betriebssystemplattformen gebildet werden. Als Betriebssystem findet hierbei beispielsweise ein UNIX Betriebssystem Verwendung, auf das eine an die spezielle Funktion der Dienststeuerknoten LSCP1 und LSCP2 angepaßte Middelware aufsetzt, beispielsweise die Alcatel Nectar Telecom Middelware. Von den von den auf den Betriebsystemplattformen SPL2 und SPL3 aufsetzenden Steuerprogrammen erbrachten Funktionen ist in Fig. 1 lediglich jeweils eine Funktion SCF1 bzw. SCF2 gezeigt.

Die Funktionen SCF1 und SCF2 stellen jeweils Dienststeuerfunktionen dar. Getriggert durch eine Anforderungsnachricht von einer Dienstvermittlungsfunktion steuern sie die Erbringung eines speziellen Telekommunikationsdienstes. Die Funktionen SCF1 und SCF2 steuern die Erbringung des Telekommunikationsdienstes hierbei gemäß des für diesen Dienst im Dienststeuerknoten LSCP1 bzw. LSCP2 vorhanden Dienstlogikprogramms.

Das Signalisierungsnetz S_NET wird von einem Nr. 7 Signalisierungsnetz gebildet.

Das lokale Kommunikationsnetz L_NET wird von einem oder auch von mehreren LAN (Local Area Network) gebildet. Bei einem solchen LAN handelt es sich um ein schnelles Rechnernetze (zur Zeit bis 100 MBit/sec) mit überwiegend dezentraler Kommunikationssteuerung, die es mehreren Benutzern ermöglicht, in einem räumlich eng begrenzten Raum die Übertragungsbandbreite eines schnellen Übertragungsmediums gemeinsam zu nutzen. Ein solches LAN besteht physikalisch aus einem Bus, Ring oder Sternnetzen, auf das vorteilhafterweise ein Mehrfachzugriffsprotokoll aufsetzt. Beispiele für ein LAN sind Ethernet-, Fast-Ethernet-, Token-Ring- und FDDI-Netze.

Der Teilnehmer A sendet mittels seines Endgeräts TE eine Verbindungsanforderung an das Telekommunikationsnetz T_NET. Die Verbindungsanforderung wird durch das Telekommunikationsnetz T_NET zum Vermittlungsknoten SSP geleitet. Die Funktion SSF erkennt, daß ein Telekommunikationsdienst für diese Verbindungsanforderung zu erbringen ist und sendet eine Anforderungsnachricht an den Dienststeuerknoten LSCP1. Die Anforderungsnachricht triggert die Funktion SCF1, die sodann die Erbringung des Telekommunikationsdienstes steuert. Die Funktionen SSF und SCF1 kommunizieren hierbei mittels Nachrichten INAPM miteinander. Bei den Nachrichten INAPM handelt es sich um IN-Applikationsnachrichten. Die Nachrichten INAPM werden hierbei von der Steuerung CONTR nicht an das Signalisierungsnetz S_NET geleitet und in den Nr. 7 Protokollstack eingepackt, wie dies für derartige Nachrichten üblich ist, sondern an das lokale Kommunikationsnetz L_NET geleitet und in einen LAN Protokollstack eingepackt. Umgekehrt werden von der Steuerung CONTR die von dem lokalen Kommunikationsnetz L_NET empfangenen Nachrichten überwacht und die Nachrichten INAPM, die der Kommunikation zwischen den Funktionen SSF und SCF1 zugeordnet sind, an die Funktion SSF weitergeleitet. Mittels dieses LAN Protokolls werden die Nachrichten INAPM somit zwischen dem Vermittlungsknoten SSP und dem Dienststeuerknoten LSCP1 transportiert.

Anhand von Fig. 2a wird nun ein erstes Ausführungsbeispiel für die Kommunikation zwischen dem Dienstvermittlungsknoten SSP und dem Dienststeuerknoten LSCP1 erläutert.

Fig. 2a zeigt auf Seiten des Vermittlungsknotens SSP mehrere Funktionsmodule SSFM1 bis SSFM3, die mit mehreren Funktionsmodulen SCFM1 bis SCFM2 auf Seiten des Dienststeuerknotens LSCP1 über das lokale Kommunikationsnetz L_NET kommunizieren. Die Funktionsmodule SSFM1 bis SSFM3 und SCFM1 bis SCFM2 weisen jeweils vier aufeinander aufbauende Bearbeitungseinheiten LPL, ADL, TCAPL und INAPL auf.

Die Funktionsmodule SSFM1 bis SSFM3 stellen jeweils den Ablauf einer Dienstvermittlungsfunktion dar, die von der Steuerung CONTR ausgeführt wird. Die Funktionsmodule SCFM1 bis SCFM2 stellen jeweils den Ablauf einer Dienststeuerfunktion dar, die von dem Dienststeuerknoten LSCP1 ausgeführt wird.

Die Bearbeitungseinheit INAPL bearbeitet des INAP Protokolls (INAP = Intelligent Network Applications Protocol), mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden beispielsweise in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert. Elemente einer Kommunikation D2 zwischen der Bearbeitungseinheiten INAP des Vermittlungsknotens SSP und des Dienststeuerknotens LSCP1 sind hierbei die Implementierung des INAP Protokolls für das verwendete "IN-Capability Set" (CS-1, CS-2 und weitere zukünftige Sets) .

Die Bearbeitungseinheit TCAPL stellt eine Protokollbearbeitungseinheit dar, die sende- und empfangsseitige Abwicklung des TCAP -Protokolls des Nr. 7 ITU-T Signalisierungssystems (TCAP = Transport Capabilities Application Part) steuert. Sie stellt einer Applikation, in diesem Fall der Bearbeitungseinheit INAP, ein Set von Operationen bereit, die von der Applikation dazu verwendet werden können, die Ausführung von Prozeduren auf einem anderen Knoten zu veranlassen und das Ergebnis der Ausführung zu empfangen. Die TCAPL Bearbeitungseinheit kann in zwei Teile zerlegt werden: Ein erster Teil bearbeitet den Austausch von "Komponenten", welche Protokolldateneinheiten sind, die entweder Anforderungen für das Ausführen von Operationen oder Daten darstellen, die die Antwort auf angeforderte Operationen darstellen. Ein zweiter Teil, der Transaktionsteil, stellt als Dienst den Austausch von Nachrichten bereit, die solche Komponenten enthalten. Es ist auch möglich, auf den zweiten Teil zu verzichten, da eine eins zu eins Zuordnung zwischen Dialogen des ersten Teils und Transaktionen des zweiten Teils besteht. Elemente einer Kommunikation D1 zwischen der Bearbeitungseinheiten INAPL des Vermittlungsknotens SSP und des Dienststeuerknotens LSCP1 sind hierbei Komponente, Dialog und Transaktions-Protokolldateneinheit.

Die Bearbeitungseinheit LPL stellt der Bearbeitungseinheit ADL als Dienst den Transport von Nachrichten mittels eines LAN Protokolls über das lokale Kommunikationsnetz L_NET bereit. Die Protokollbearbeitungseinheit bearbeitet hierzu einen Protokollstack von mehreren, üblicherweise für die Kommunikation in LAN Rechnernetzen verwendeten Protokollen:

Die Protokollbearbeitungseinheit LPL weist Funktionen zur Bearbeitung der MAC Protokolle (MAC = Medium Access Layer) des Kommunikationsnetzes L_NET auf. Solche für LANs typische Protokolle, die auch als LAN Protokolle bezeichnet werden, sind beispielsweise Ethernet-, Fast-Ethernet-, FDDI- oder Token-Protokolle. Auf diesen Funktionen setzen Funktionen zur Bearbeitung des IP Protokolls auf (IP = Internet Protokoll). Oberhalb der IP-Protokollschicht besteht eine Möglichkeit darin, das TCP Protokoll (TCP = Transport Control Protocol) zu verwenden, das einen verbindungsorientierten Dienst anbietet, und die entsprechenden TCP Protokollbearbeitungsfunktion in die Protokollbearbeitungseinheit LPL zu integrieren. Eine andere Möglichkeit besteht darin, das UDP Protokoll (UDP = User Datagram Protocol) zu verwenden, das einen verbindungslosen Dienst anbietet. Es ist hierbei vorteilhafte, das TCP Protokoll zu verwenden, da dadurch besser die selbe Dienstgüte erreicht werden kann, wie sie von der vergleichbaren Schicht des Nr. 7 Signalisierungssystems erwartet werden kann.

Die Bearbeitungseinheit ADL stellt zusätzliche Funktionen bereit, die die Zusammenarbeit zwischen den Bearbeitungseinheiten TCAPL und LPL ermöglichen.

Die Bearbeitungseinheit ADL stellt hierzu der Bearbeitungseinheit TCAPL eine Pseudo SCCP "Primitive" Schnittstelle bereit (SCCP =Signalling Control Capabilty Part), eine Schnittstelle, die eine SCCP "Primitive" Schnittstelle simuliert. Beim SCCP Protokoll handelt es sich hierbei um dasjenige Nr. 7 Protokoll, auf dem normalerweise das TCAP Protokoll aufsetzt.

Es ist hierbei ausreichende, folgende "Primitive" zu simulieren:
- UNITDATA-Request (Called Address, Calling Address, Sequence Control, Return Option, User Data)
- UNITDATA-lndication (Called Address, Calling Address, Sequence Control, Return Option, User Data)
- NOTICE-lndication (Called Address, Calling Address,Reason of Return, User Data)

Weiter werden von der Bearbeitungseinheiten ADL TCAP-Protokolldateneinheiten aus der Bearbeitungseinheit LPL übernommen und ihr übergeben. Diese Funktion wird hierbei vorteilhafterweise mittels Zugriff auf eine "socket" Schnittstelle realisiert. Die Protokollbearbeitungseinheit ADL verwaltet hierzu die "sockets", führt beispielsweise die Initialisierung und die Freigabe der "sockets" durch, und stellt eine sichere Kommunikation bereit. Die Programmschnittstelle (API = Application Programm Interface), um auf die Bearbeitungseinheiten ADL zuzugreifen, besteht hierbei in der "socket" Schnittstelle. Diese ermöglicht es, TCP Verbindungen zu eröffnen, Daten über solche Verbindungen zu senden und zu empfangen und TCP Verbindungen zu beenden.

Es ist auch möglich, daß von den Bearbeitungseinheiten TCAPL, ADL und LPL andere Protokolle bearbeitet werden, die den Transport der INAP-Nachrichten über das lokale Kommunikationsnetz L_NET ermöglichen.

Anhand von Fig. 2b wird nun ein zweites Ausführungsbeispiel für die Kommunikation zwischen dem Dienstvermittlungsknoten SSP und dem Dienststeuerknoten LSCP1 erläutert.

Fig. 2b zeigt auf Seiten des Vermittlungsknotens SSP mehrere Funktionsmodule SSFM1' bis SSFM3', die mit den Funktionsmodulen SCFM1 bis SCFM2 auf Seiten des Dienststeuerknotens LSCP1 über ein Kommunikationsnetz INTKOM, mehrere Netzübergangsmodule GM1 bis GM2 und über das lokale Kommunikationsnetz L_NET kommunizieren. Die Funktionsmodule SCFM1 bis SCFM2 sind gemäß Fig. 2a aufgebaut. Die Funktionsmodule SSFM1' bis SSFM3' sind wie die Funktionsmodule SSFM1 bis SSFM3 aufgebaut, mit dem Unterschied, daß jeweils die Bearbeitungseinheit LPL durch eine Bearbeitungseinheit PPL ersetzt ist. Die Netzübergangsmodule GM1 bis GM2 weisen jeweils eine Bearbeitungseinheit PPL und LPL auf, über die sie mit dem Kommunikationsnetz INTKOM bzw. L_NET verbunden sind.

Die Steuerung CONTR ist in diesem Ausführungsbeispiel aus mehreren Rechnern aufgebaut, die über das Kommunikationsnetz INTKOM miteinander verbunden sind. Die Netzübergangsmodule GM1 bis GM2 stellen jeweils die Ausführung einer Gatewayfunktion zwischen den Kommunikationsnetzen INTKOM und L_NET dar. Die Netzübergangsmodule GM1 bis GM2 können hierbei auf einem oder auf mehreren Rechnern positionierte sein, die jeweils physikalisch mit beiden Kommunikationsnetzen INTKOM und L_NET verbunden sind.

Das Kommunikationsnetz INTKOM wird von einem schnellen Rechnernetz gebildet. Es ist auch möglich, daß als Kommunikationsnetz INTKOM das Telekommunikationsnetz T_NET verwendet wird.

Die Bearbeitungseinheit PPL bearbeitet die für den Datentransport über das Kommunikationsnetz INTKOM verwendeten Kommunikationsprotokolle. Die Netzübergangsmodule GM1 bis GM2 führen mittels der Bearbeitungseinheiten PPL und LPL eine für die Bearbeitungseinheit ADL transparente Umsetzung der Transport-Protokolle der Kommunikationsnetze INTKOM und L_NET ineinander um. Es ist hierbei vorteilhaft, daß verschiedene Netzübergangsmodule physikalisch getrennte LANs bedienen, die in diesem Fall auch auf unterschiedlichen MAC Protokollen basieren können. Über die Netzübergangsmodule GM1 bis GM2 können natürlich auch Daten für andere Zwecke ausgetauscht werden.

Anhand von Fig. 3 wird nun der Aufbau des Dienststeuerknotens LSCP1 beispielhaft erläutert.

Fig. 3 zeigt den Dienststeuerknoten LSCP1, der mit dem Kommunikationsnetz L_NET verbunden ist. Der Dienststeuerknoten LSCP1 weist zwei Funktionsgruppen FEF und BEF auf. Falls der Dienststeuerknoten LSCP1 aus mehreren Rechnern aufgebaut ist, ist es möglich, nur den Rechner, der die Funktionsgruppe FEF bearbeitet, mit dem Kommunikationsnetz L_NET zu verbinden und die anderen Rechner über ein eigenständiges Kommunikationsnetz mit diesem Rechner zu verbinden. Es ist natürlich auch möglich, all diese Rechner über das Kommunikationsnetz L_NET miteinander zu verbinden.

Die Funktionsgruppe FEF weist die Bearbeitungseinheiten LPL, ADL und TCAPL auf, die gemäß Fig. 2a aufgebaut sind, und weitere Bearbeitungseinheiten UD und SD auf. Die Funktionsgruppe DEF weist die Datenbank UDT und zwei Dienstprozesse SPA und SPB auf. Die Anzahl der Dienstprozesse ist beispielhaft gewählt.

Die Bearbeitungseinheiten SD ordnet TCAP Nachrichten Dienstprozessen zu. Sobald eine TCAP Nachricht an sie geleitet wird, entscheidet sie, an welchen Dienst-Prozeß die TCAP Nachricht weitergeleitet werden soll. Handelt es sich bei der Nachricht um eine Dienstanforderungsnachrichten, die die Ausführung eines Dienstes erstmals triggern, so führt sie diese Zuteilung aufgrund der Nummer des angeforderten Dienstes durch. Die Nachricht wird sodann zu einem Rechner geleitet, auf dem das zugehörige Dienstlogikprogramm vorhanden ist, die Ausführung des Programms wird gestartet und somit ein Dienstprozeß erzeugt. Handelt es sich um eine Nachricht, die einem bereits erzeugten Dienstprozeß zuzuordnen ist, so bestimmt sie die Adresse dieses Dienstprozesses mittels der Bearbeitungseinheit UD und leitet die TCAP Nachricht an diesen Dienstprozeß weiter.

Die Bearbeitungseinheit UD bestimmt mittels Zugriff auf die Datenbank UDT die Adresse des Dienstprozesse, für den eine TCAP Nachricht mit einer bestimmten Absenderadresse bestimmt ist. Weiter aktualisiert sie die Datenbank UDT kontinuierlich. Hierzu empfängt sie ständig Nachrichten, die ihr die Erzeugung und das Ende von Dienstprozessen anzeigen. Diese Daten speichert sie sodann in der Datenbank UDT ab.

Die Dienstprozesse SPA und SPB stellen die Ausführung eines Dienstlogikprogramms dar und steuern somit die Ausführung von Telekommunikationsdiensten. Sie weisen aus funktioneller Sicht eine TCAP Programm-Schnittstelle (Aplikation Programm Interface) auf, auf die Funktionen IN1 und IN2 zur Durchführung der für den spezifischen, von ihnen gesteuerten Telekommunikationsdienst, notwendigen INAP Interaktion aufsetzen.

Es ist hierbei vorteilhaft daß das Dienstlogikprogramm bei seiner Ausführung über das Kommunikationsnetz L_NET auf in dem Vermittlungsknoten abgespeicherte Daten zugreift. Bei solchen Daten handelt es sich beispielsweise um Teilnehmerdaten, die das Dienstlogikprogramm zur Erbringung des Dienstes benötigt. Dies hat den Vorteil, daß solche Daten nicht zusätzlich in einer Datenbank des Dienststeuerknotens LSCP1 abgespeichert und konsistenz gehalten werden müssen.

Bei einem solchen Zugriff wird eine Datenbankabfrage-Nachricht mittels des von der Bearbeitungseinheit LPL bereitgestellten Dienstes an den Vermittlungsknoten SSP geleitet. Als höhere Protokollschichten finden die von den Bearbeitungseinheiten TCAPL und INAPL bereitgestellten Protokolle keine Verwendung. Als Interaktionsmechanismus zur Abfrage von solchen Daten kann beispielsweise eine Objekt-Infrastruktur, z. B. CORBA (Common Object Request Broker Architecture) oder eine Datenbanksprache dienen.

## Patentansprüche

1. Verfahren, um Teilnehmern (A) eines Kommunikationsnetzes (T_NET) Telekommunikationsdienste bereitzustellen, wobei bei dem Verfahren durch eine Verbindungsanforderung eines Teilnehmers (A) eine von der Steuerung (CONTR) eines Vermittlungsknotens (SSP) des Telekommunikationsnetzes (T_NET) ausgeführte Dienstvermittlungsfunktion (SSF) veranlaßt wird, eine Dienstanforderungsnachricht an eine Dienststeuerfunktion (LSCF1) zu senden, worauf die Dienststeuerfunktion (LSCF1) die Erbringung des Telekommunikationsdienstes steuert,
**dadurch gekennzeichnet,** daß die
Dienstanforderungsnachricht von der Steuerung (CONTR) des Vermittlungsknotens (SSP) auf ein LAN (L_NET) umgeleitete wird, das die System plattform (SPL1) der Steuerung (CONTR) des Vermittlungsknotens (SSP) mit der Systemplattform oder mit den Systemplattformen (SPL1, SPL2) eines oder mehrerer Dienststeuerknoten (LSCP1, LSCP2) verbindet, daß die Dienststeuerfunktion (SCF1) von dem bzw. von einem der mit dem Dienstvermittlungsknoten (SSP) über das LAN (L_NET) verbundenen Dienststeuerknoten (LSCP1, LSCP2) ausgeführt wird, und daß die Dienstvermittlungsfunktion (SSF) mit der Dienststeuerfunktion (SCF1) zur Diensterbringung INAP Nachrichten (INAPM) austauscht, die mittels eines LAN Protokolls zwischen dem Vermittlungsknoten (SSP) und dem Dienststeuerknoten (LSCP1) transportiert werden, der die Dienststeuerfunktion (SCF1) ausführt.

2. Verfahren nach Anspruch 1, dadurch gekennzeichnet, daß der Dienststeuerknoten (LSCP1) bei der Diensterbringung ohne Einschaltung der Dienstvermittlungsfunktion (SSP) über das LAN (L_NET) auf von dem Vermittlungsknoten (SSP) verwaltete Daten zugreift.

3. Verfahren nach Anspruch 1, dadurch gekennzeichnet, daß der Dienststeuerknoten (LSCP1) Dienststeuerfunktionen (SCF1) ausschließlich für Dienstvermittlungsfunktionen (SSF) erbringt, die von dem mit ihm über das LAN (L_NET) verbundenen Vermittlungsknoten (SSP) ausgeführt werden.

4. Verfahren nach Anspruch 1, dadurch gekennzeichnet, daß die INAP Nachrichten auf einem TCAP Protokoll aufsetzen.

5. Verfahren nach Anspruch 4, dadurch gekennzeichnet, daß das TCAP Protokoll über eine Adaptionsschicht auf einem TCP/IP Protokoll aufsetzt, das seinerseits auf dem LAN Protokoll aufsetzt.

6. Verfahren nach Anspruch 1, dadurch gekennzeichnet, daß der Vermittlungsknoten (SSP) ein oder mehrere Netzübergangsfunktionen (GM1, GM2) ausführt, die das interne Kommunikationsprotokoll des Vermittlungsknotens (SSP) auf das LAN Protokoll umsetzen.

7. Verfahren nach Anspruch 1, dadurch gekennzeichnet, daß bei der Umleitung der Dienstanforderungsnachricht eine Auswahl zwischen zwei oder mehr über das LAN (L_NET) verbundenen Dienststeuerknoten (LSCP1, LSCP2) je nach Auslastung dynamisch vorgenommen wird.

8. Verfahren nach Anspruch 1, dadurch gekennzeichnet, daß die Systemplattform (SPL2) des Dienststeuerknotens (LSCP1) auf zwei oder mehr Server Rechnern basiert.

9. Vermittlungsknoten (SSP) für ein Telekommunikationsnetz (T_NET), der mit einer Steuerung (CONTR) versehen ist, die so ausgestaltet ist, daß sie ein oder mehrere Dienstvermittlungsfunktion (SSF) ausführt, die jeweils durch eine Verbindungsanforderung eines Teilnehmers (A) des Telekommunikationsnetzes (T_NET), veranlaßt werden, eine Dienstanforderungsnachricht an eine Dienststeuerfunktion (SCF1) zu senden, die die Erbringung eines Telekommunikationsdienstes steuert,
**dadurch gekennzeichnet,** daß die Steuerung (CONTR) des Vermittlungsknotens (SSP) mit einer Systemplattform (SPL1) versehen ist, die so ausgestaltet ist, daß sie über ein LAN (L_NET) mit der Systemplattform oder mit den Systemplattformen (SPL1, SPL2) eines oder mehrerer Dienststeuerknoten (LSCP1, LSCP2) verbindbar ist, daß die Steuerung (CONTR) weiter so ausgestaltet ist, daß sie Dienstanforderungsnachrichten von der oder von mehreren der von ihr ausgeführten Dienststeuerfunktionen (SSF) auf das LAN (L_NET) umleitete, und daß die Steuerung (CONTR) weiter so ausgestaltet ist, daß eine oder mehrere von ihr ausgeführte Dienstvermittlungsfunktionen (SSF) zur Diensterbringung INAP Nachrichten (INAPM) mit einer oder mit mehreren Dienststeuerfunktionen (SCF1) austauschen, die von einem über das LAN mit dem Vermittlungsknoten (SSP) verbundenen Dienststeuerknoten (LSCP1, LSCP2) ausgeführt werden, wobei die INAP Nachrichten (INAPM) jeweils mittels eines LAN Protokolls zwischen dem Vermittlungsknoten (SSP) und dem Dienststeuerknoten (LSCP1) transportiert werden, der die Dienststeuerfunktion (SCF1) ausführt.

10. Dienststeuerknoten (LSCP1) zur Unterstützung der Erbringung von Telekommunikationsdiensten für Teilnehmer (A) eines Telekommunikationsnetzes (T_NET), wobei der Dienststeuerknoten (LSCP1) mit Mitteln (FEF, BEF) zum Ausführen einer oder mehrerer Dienststeuerfunktionen (SCF1) versehen ist, die jeweils durch den Empfang einer Dienstanforderungsnachricht von einer Dienstvermittlungsfunktion (SSF) veranlaßt die Erbringung eines Telekommunikationsdienstes steuern,
**dadurch gekennzeichnet,** daß der Dienststeuerknoten (LSCP1) mit einer System plattform (SPL2) versehen ist, die so ausgestaltet ist, daß sie über ein LAN (L_NET) mit der Systemplattform (SPL1) eines Vermittlungsknotens (SSP) verbindbar ist, daß die Mitteln (FEF, BEF) zum Ausführen einer oder mehrerer Dienststeuerfunktionen (SCF1) weiter so ausgestaltet sind, daß sie das Ausführen von ein oder mehreren Dienststeuerfunktionen (SCF1) für Dienstvermittlungsfunktionen (SSF) ermöglichen, die von einem mit dem Dienststeuerknoten (LSCP1) über das LAN (L_NET) verbundenen Vermittlungsknoten (SSD) ausgeführt werden, und daß die Mitteln (FEF, BEF) zum Ausführen einer oder mehrerer Dienststeuerfunktionen (SCF1) weiter so ausgestaltet sind, daß sie zur Diensterbringung mit der oder den Dienstvermittlungsfunktionen (SSF) INAP Nachrichten (INAPM) austauscht, die jeweils mittels eines LAN Protokolls zwischen dem Dienststeuerknoten (LSCP1) und dem Vermittlungsknoten (SSP) transportiert werden, der die Dienstvermittlungsfunktion (SSF) ausführt.

11. Vermittlungssystem (EX) für ein Telekommunikationsnetz (T_NET) mit einem Vermittlungsknoten (SSP), der so ausgestaltet ist, daß durch eine Verbindungsanforderung eines Teilnehmers (A) des Kommunikationsnetzes (T_NET) eine von der Steuerung (CONTR) des Vermittlungsknotens (SSP) ausgeführte Dienstvermittlungsfunktion (SSF) veranlaßt wird, eine Dienstanforderungsnachricht an eine Dienststeuerfunktion (LSCF1) zu senden,
**dadurch gekennzeichnet,** daß das Vermittlungssystem (EXS) mit einem oder mit mehreren Dienststeuerknoten (LSCP1, LSCP2) und einem LAN (L_NET) versehen ist, mittels dem der Dienstvermittlungsknoten (SSP) mit dem oder den Dienststeuerknoten (LSCP1, LSCP2) verbunden ist, daß der Vermittlungsknoten (SSP) weiter so ausgestaltet ist, daß er Dienstanforderungsnachricht von der Dienstvermittlungsfunktion (SSP) auf das LAN umleitete, daß der oder die Dienststeuerknoten (LSCP1, LSCP2) jeweils so ausgestaltet sind, daß der jeweilige Dienststeuerknoten (LSCP1, LSCP2) Dienststeuerfunktion (SCF1, SCF2)) für den mit ihm über das LAN (L_NET) verbundenen Dienstvermittlungsknoten (SSP) ausführt, und daß der Vermittlungsknoten (SSP) und der oder die Dienststeuerknoten (LSCP1, LSCP1) so ausgestaltet sind, daß die Dienstvermittlungsfunktion (SSF) mit der Dienststeuerfunktion (SCF1) zur Diensterbringung INAP Nachrichten (INAPM) austauscht, die mittels eines LAN Protokolls zwischen dem Vermittlungsknoten (SSP) und dem Dienststeuerknoten (LSCP1) transportiert werden, der die Dienststeuerfunktion (SCF1) ausführt.
